# EUROPÄISCHE PATENTANMELDUNG

(11) **EP 1 870 665 A2**
(43) Veröffentlichungstag der Anmeldung: **26.12.2007**
(21) Anmeldenummer: 07010458.3
(22) Anmeldetag: 25.05.2007
(51) Int. Cl.: G01B 3/48, B23G 1/16

(54) **Verfahren und Anordnung zum Lehren eines in wenigstens zwei Arbeitsschritten erzeugten Gewindes**

(30) Priorität: 19.06.2006 DE 102006028379
(71) Anmelder: EMUGE-Werk Richard Glimpel GmbH & Co.KG Fabrik für Präzisionswerkzeuge, 91207 Lauf (DE)
(72) Erfinder: Glimpel Helmut, 9107 Lauf (DE); Hechtle Dietmar, 91257 Pegnitz (DE)
(74) Vertreter: Schröer, Gernot H.

(57) **Zusammenfassung**

Das Verfahren zum Lehren eines in wenigsten zwei Arbeitschtitten erzeugten Gewindes in einem Werkstück umfasst die folgenden Verfahrensschritte:
a) Lehren wenigstens eines in wenigstens einem ersten Arbeitsschtitt (oder: Prozessschritt) durch Abtragen von Material des Werkstücks (oder: spanabhebend, spanend) erzeugten Vorgewindes mit einem Vorgewindeprofil mittels wenigstens einer an das Vorgewindeprofil angepassten Vorgewindelchte, insbesondere einer Vorgewlnde-Crutlehre und/oder einer Vorgewinde-Ausschusslehre,
b) Lehren eines in wenigstes einem zweiten Arbeitschtitt durch plastisches Eindrücken (oder: spanloses Formen oder Umformen) des Materials des Werkstücks wenigstens in einem Teilbereich des Vorgewindeprofils mittels wenigstens eines Gewindeformprofils nachgeformten Endgewindes mit einem Endgewindeprofil mittels wenigstens einer an das Endgewindeprofil angepassten Endgewindelehre, insbesondere einer Endgewinde-Gutlehre und/oder einer Endgewinde-Ausschusslehre.

## Beschreibung

Die Erfindung betrifft ein Verfahren und eine Anordnung zum Lehren eines in wenigstens zwei Arbeitsschritten erzeugten Gewindes.

Zur Gewindeerzeugung oder Gewindenachbearbeitung sind ausschließlich spanabhebend, ausschließlich spanlos und sowohl spanabhebend als auch spanlos arbeitende Verfahren und Gewindewerkzeuge bekannt.

Unter die spanabhebenden oder spanenden Gewindewerkzeuge fallen die Gewindebohrer (vgl. Handbuch der Gewindetechnik und Frästechnik, Herausgeber: EMUGE-FRANKEN, Verlag: Publicis Corporate Publishing, Erscheinungsjahr: 2004 (ISBN 3-89578-232-7), im Folgenden nur als "EMUGE-Handbuch" bezeichnet, Kapitel 8, Seiten 181 bis 298*)* und die Gewindefräser (vgl. EMUGE-Handbuch, Kapitel 10, Seiten 325 bis 372*).*

Unter die spanlosen Gewindewerkzeuge fallen die sogenannten Gewindefurcher (vgl. EMUGE-Handbuch, Kapitel 9, Seiten 299 bis 324*)* sowie die sogenannten Zirkulargewindeformer (vgl. WO 02/094491 A1 0der DE 103 18 203 A1*).* Ein Vorteil der spanlosen Gewindeerzeugung im Vergleich zu spanabhebender Gewindeerzeugung ist, dass durch die Verfestigung oder Verdichtung an der Oberfläche die Härte des Werkstoffs im Bereich des Gewindeprofils ansteigt und somit ein verschleißfesteres Gewinde erzeugt werden kann.

Schließlich sind auch kombinierte Verfahren mit wenigstens zwei Arbeitsschritten zum Erzeugen von Innengewinden bekannt, bei denen in einem Arbeitsschritt ein Vorgewinde erzeugt wird und in einem weiteren Arbeitsschritt aus dem Vorgewinde das Innengewinde durch Formen fertiggestellt wird. Durch dieses zwei- oder mehrstufige Verfahren muss nicht das gesamte Volumen des Gewindeprofils von einem einzigen Formwerkzeug durch plastisches Verformen des Materials erzeugt werden und die Belastung und der Verschleiß des Formwerkzeuges werden reduziert.

Für ein solches kombiniertes Verfahren mit mehreren Arbeitsschritten kann in einer ersten Variante in jedem Arbeitsschritt ein gesondertes Werkzeug verwendet werden. Aus DE 10 2004 033 772 A1 ist ein solches Verfahren bekannt, bei dem in einem ersten Arbeitsschtitt im Werkstück ein Vorgewinde spanend oder spanlos vorerzeugt wird mittels eines Gewindebohrers, Gewindefräsers, durch Drehen, Schleifen oder Wickeln oder auch mittels eines Gewindefurchers und in einem zweiten Arbeitsschritt die Fertigerzeugung des Vorgewindes spanlos erfolgt unter Verwendung eines Gewindefurchers oder Zirkularformers, dessen Formkeile in den Gewindegrund des Vorgewindes eindrücken. Die Formkeile werden dabei durch Verbreiterungen ihrer Flanken im vorerzeugten Gewinde zentriert. Die Gewindeflanken des im ersten Arbeitsschritt erzeugten Vorgewindes bleiben im zweiten Arbeitsschritt unverändert, da die Verbreiterungen der Formkeilflanken nur an den Vorgewindeflanken zur Zentrierung anliegen, diese jedoch nicht verformen. Im zweiten Arbeitsschritt wird das Werkstückmaterial lediglich im Bereich des die beiden Gewindeflanken verbindenden Gewindegrundes des Vorgewindes weiter verformt. Dadurch werden im zweiten Arbeitsschritt der gesamte Gewindegrund und auch noch sich unmittelbar an den Gewindegrund anschließenden und in Verlängerung der Gewindeflanken des Vorgewinde liegenden Bereiche der Gewindeflanken des Endgewindes durch Formen fertiggestellt und sind dadurch zusätzlich verdichtet und verfestigt, während der überwiegende Bereich der Gewindeflanken des Endgewindes bereits im ersten Arbeitsschritt vollständig erzeugt wurde und im zweiten Arbeitsschritt nicht weiter bearbeitet wurde.

In einer zweiten bekannten Variante eines kombinierten Verfahrens mit mehreren Arbeitsschritten wird ein Kombinationswerkzeug mit einem spanabhebenden Gewindebohrteil und einem axial zur Werkzeugachse zum Gewindebohrteil versetzten spanlos arbeitenden Gewindefurchteil an einem Werkzeugschaft verwendet, wobei unter Drehung um die Werkzeugachse und axialem Vorschub in einem ersten Arbeitsschritt der Gewindebohrteil ein Vorgewinde in das Werkstück schneidet und in einem zweiten Arbeitsschritt der nachfolgende Gewindefurchteil das Vorgewinde in vorgegebener Weise zum endgültigen Gewinde umformt. Es schneidet also der Gewindebohrer das Gewinde vor und der Gewindefurcher furcht das vorgeschnittene Gewinde teilweise nach. Ein solches axiales Kombinationswerkzeug und Verfahren sind aus DE 70 17 590 U und DE 196 49 190 C2 bekannt.

Gemäß DE 196 49 190 C2 wird das Gewinde zunächst mit dem Gewindebohrer des Kombinationswerkzeuges in den Gewindeflanken profil- und maßgenau spanabhebend erzeugt und anschließend nur der Gewindegrund dieses vorgeschnittenen Gewindes mit dem unmittelbar nachfolgenden Gewindefurcher auf einen vorbestimmten Enddurchmesser spanlos verdichtet. Dadurch können vor allem die ersten Gewindegänge im Anschluss an einen Gewindeanschnitt schwingungsfester und weniger bruchgefährdet erzeugt werden. Im zweiten Arbeitschritt bleiben die beiden vom Gewindebohrer im ersten Arbeitsschritt geschnittenen Gewindeflanken vollständig unverändert.

Aus DE 70 17 590 U1 ist ein Kombinationswerkzeug zum Herstellen von Innengewinden bekannt mit einem als Vor- bzw. Mittelschneider ausgebildeten Gewindeschneidbohrer als vorderes Werkzeugteil zum Vorschneiden des Gewindes und einem sich in Arbeitsrichtung anschließenden Gewindefurcher als hinteres Werkzeugteil zum Fertigbearbeiten des Gewindes.

Allgemeine Begriffe und Größen sowie Parameter von Gewinden sowie verschiedene Gewindearten sind national und international normiert, z.B. in der DIN 2244, und ergeben sich auch aus EMUGE-Handbuch, Kapitel 15, Seiten 468 bis 566.

Der einfache Flankendurchmesser eines Innengewindes ist der Durchmesser eines geometrisch-idealen Kreiszylinders, dessen Mantellinien das Gewinde so schneiden, dass die Abschnitte in den Gewindelücken gleich der halben Teilung sind. Die Achse des Kreiszylinders ist koaxial zur Achse des einfachen Flankendurchmessers.

Der Flankendurchmesser eines Außengewindes oder Innengewindes ist der Durchmesser eines geometrisch-idealen Kreiszylinders, dessen Mantellinien das Gewinde so schneiden, dass die durch eine Gewindelücke und einen benachbarten Gewindezahn desselben Gewindeganges gebildeten Abschnitte der Mantellinie gleich lang sind. Die Achse des Kreiszylinders ist wieder koaxial zur Achse des Flankendurchmessers.

Einen Überblick über Gewindelehren zur Lehrung oder Prüfung von Gewinden gibt das EMUGE-Handbuch in Kapitel 12, Seite 405 bis 422*.*

Für die Lehrung oder Prüfung eines Innengewindes, insbesondere Mutter-Innengewindes, werden ein Gewinde-Gut-Lehrdorn und ein Gewinde-Ausschuss-Lehrdorn verwendet.

Der Gewinde-Gut-Lehrdorn prüft das sogenannte Paarungsmaß des Innengewindes und die Einschraubbarkeit. Dabei wird das Kleinstmaß des Innengewinde-Flankendurchmessers einschließlich gewisser Formabweichungen im Gewinde, z.B. Steigungs- und Gewindeprofilwinkel-Abweichungen, und das Kleinstmaß des Außendurchmessers des Innengewindes geprüft. Damit wird geprüft, ob das gerade Gewindeflankenstück genügend lang ist. Nicht geprüft wird der Kerndurchmesser des Innengewindes. Der Gewinde-Gut-Lehrdorn muss sich von Hand ohne Anwendung besonderer Kraft auf ganze Länge des Werkstückgewindes einschrauben lassen.

Der Gewinde-Ausschuss-Lehrdorn prüft, ob der Ist-Flankendurchmesser des Innengewindes das vorgeschriebene Größtmaß überschreitet. Der Innengewinde-Außendurchmesser und der Innengewinde-Kerndurchmesser werden nicht geprüft. Der Gewinde-Ausschuss-Lehrdorn darf sich von Hand ohne Anwendung besonderer Kraft in das Werkstückgewinde von beiden Seiten nicht mehr als zwei Umdrehungen einschrauben lassen und hat deshalb im Allgemeinen eine Gewindelänge von mindestens drei Gängen. Das Gewindeprofil hat im Allgemeinen verkürzte Flanken.

Der Gewindegrenz-Lehrdorn ist die Kombination von Gewinde-Gut-Lehrdorn und Gewinde-Ausschuss-Lehrdorn auf einem Griff.

Der Innengewinde-Kerndurchmesser wird mit einem glatten, zylindrischen Gut- und Ausschuss-Lehrdorn bzw. Grenz-Lehrdorn geprüft. Grundsätzlich soll vor Lehrung des Innengewinde-Flankendurchmessers eine Prüfung des Innengewinde-Kerndurchmessers erfolgen. Der glatte Gut-Lehrdorn muss sich von Hand ohne Anwendung besonderer Kraft durch das Werkstückgewinde führen lassen. Das Gewinde an den Lehrdornen oder Lehren wird an das zu messende Gewinde angepasst, insbesondere an ein metrisches Iso-Gewinde oder ein kegeliges Gewinde oder ein Self-lock-Gewinde etc.

Die Lehrung oder Überprüfung erzeugter Gewinde wird am Ende der Gewindeerzeugung oder bei fertiggestelltem Gewinde durchgeführt.

Der Erfindung liegt nun die Aufgabe zugrunde, ein neues Verfahren und eine neue Anordnung zum Lehren eines in wenigstens zwei Arbeitsschritten erzeugten Gewindes anzugeben.

Diese Aufgabe wird gemäß der Erfindung hinsichtlich des Verfahrens gelöst mit den Merkmalen des Patentanspruchs 1 und hinsichtlich der Anordnung gelöst mit den Merkmalen des Patentanspruchs 7.

Das Verfahren zum Lehren eines in wenigstens zwei Arbeitschritten erzeugten Gewindes in einem Werkstück umfasst die folgenden Verfahrensschritte:
a) Lehren wenigstens eines in wenigstens einem ersten Arbeitsschritt (oder: Prozessschritt) durch Abtragen von Material des Werkstücks (oder: spanabhebend, spanend) erzeugten Vorgewindes (oder: Zwischengewindes) mit einem Vorgewindeprofil mittels wenigstens einer an das Vorgewindeprofil angepassten Vorgewindelehre,
b) Lehren eines in wenigstes einem zweiten Arbeitschritt durch plastisches Eindrücken (oder: spanloses Formen oder Umformen) des Materials des Werkstütks wenigstens in einem Teilbereich des Vorgewindeprofils mittels wenigstens eines Gewindeformprofils erzeugten Endgewindes mit einem Endgewindeprofil mittels wenigstens einer an das Endgewindeprofil angepassten Endgewindelehre.

Die Anordnung zum Lehren eines in wenigstens zwei Arbeitschritten erzeugten Gewindes in einem Werkstück umfasst
a) wenigstens eine Vorgewindelehre zum Lehren eines in wenigstens einem ersten Arbeitsschritt durch Abtragen von Material des Werkstücks (oder: spanabhebend, spanend) erzeugten Vorgewindes mit einem Vorgewindeprofil mit einem an das Vorgewindeprofil angepassten Lehrengewindeprofil und
b) wenigstens eine Endgewindelehre zum Lehren eines in wenigstes einem zweiten Arbeitschritt durch plastisches Eindrücken (oder: spanloses Formen oder Umformen) des Materials des Werkstücks wenigstens in einem Teilbereich des Vorgewindeprofils mittels wenigstens eines Gewindeformprofils erzeugten Endgewindes mit einem Endgewindeprofil mit einem an das Endgewindeprofil angepassten Lehrengewindeprofil.

Gemäß der Erfindung wird also nicht nur das Endgewinde gelehrt wie beim Stand der Technik, sondern es wird sowohl das Zwischengewinde oder Vorgewinde als auch das Endgewinde mit speziellen in ihrer Profilaufteilung jeweils an Vorgewinde oder Endgewinde angepassten Gewindelehren gelehrt. Die separate Lehrung oder Prüfung der vorerzeugten Vorgewinde und fertigerzeugten Endgewinde mit zugehörigen Gewindelehren gemäß der Erfindung ermöglicht eine hochgenaue Fertigung eines Gewindes in engen Toleranzgrenzen und mit hoher Prozesssicherheit. Als Gewindelehren zum Prüfen von Vorgewinde und Endgewinde werden bevorzugt jeweils zugehörige Gewinde-Gutlehren und/oder Gewinde-Ausschusslehren und ggf. anschließend ein Gewinde-Grenzlehrdorn eingesetzt.

Vorteilhafte Ausgestaltungen und Weiterbildungen gemäß der Erfindung ergeben sich aus den vom Anspruch 1 oder Anspruch 7 jeweils abhängigen Ansprüchen.

Die Lehrung von Vorgewinde und Endgewinde und die Profile der zum Einsatz kommenden Gewindelehren werden in der Regel abhängig von der Profilaufteilung zwischen Vorgewindeprofil und Endgewindeprofil gewählt, also insbesondere davon welche Profilbereiche des Vorgewindeprofils zu dem Endgewindeprofil umgeformt werden und welche beim Nachformen unbearbeitet bleiben also dann auch beim Endgewinde ausschließlich spanend erzeugt sind. Bei den nicht nachgeformten Gewindeprofilbereichen kann es nämlich genügen, diese Bereiche nur beim Vorgewinde zu lehren. Nachgeformte Bereiche des Endgewindes werden dagegen in der Regel auch mit der Endgewindelehre gelehrt, um das Ergebnis des Nachformens nachprüfen zu können.

Bei einem Vorgewindeprofil mit Vorgewindegrund und Vorgewindeflanken können der Vorgewindegrund und/oder die Vorgewindeflanken in dessen bzw. deren Gestalt und/oder Abmessung gelehrt werden. Vorzugsweise werden sowohl Vorgewindegrund als auch Vorgewindeflanken gelehrt, vorzugsweise mit separaten Lehren.

Auch bei einem Endgewinde mit Endgewindeprofil mit Endgewindegrund und Endgewindeflanken können der Endgewindegrund und/oder die Endgewindeflanken in dessen bzw. deren Gestalt und/oder Abmessung gelehrt werden.

Als Vorgewindelehre(n) kommen insbesondere eine Gewinde-Gut-Lehre (oder: -Lehrdorn) und eine Gewinde-Ausschuss-Lehre (oder: Lehrdorn) in Betracht, die jeweils an das Vorgewindeprofil angepasst sind, oder auch ein Gutlehre und Ausschusslehre kombinierender Gewindegrenz-Lehrdorn. Bei der Endgewindelehre verwendet man in der Regel zumindest eine Gutlehre und gegebenenfalls auch eine Ausschusslehre.

Es wird also in wenigstens einem ersten Arbeitsschritt zunächst ein Vorgewinde in dem Werkstück spanabhebend oder durch Materialabtrag erzeugt und dann wird in wenigstens einem zweiten Arbeitsschritt, ohne Materialabtrag, nur durch plastisches Eindrücken eines Gewindeformwerkzeugs und die dadurch bewirkte bleibende Verformung des Werkstückmaterials, das Vorgewinde nachbearbeitet und in ein Endgewinde weitergeformt oder umgeformt. Es wird also, mit anderen Worten, beim plastischen Eindrücken zum Erzeugen des Endgewindes im zweiten Arbeitsschritt ein so hoher Druck auf die Werkstückoberfläche mittels des Werkzeugs ausgeübt, dass sich, über eine rein elastische Verformung hinaus, eine gezielte plastische Umformung des Werkstückmaterials im Gewindebereich ergibt, die wiederum zu einer Volumenvergrößerung im Endgewindeprofil gegenüber dem Vorgewindeprofil führt. Das plastische Eindrücken oder Umformen bewirkt eine Verfestigung des Gefüges im Werkstückmaterial an den betroffenen Gewindeprofilbereiche und in der Regel auch ein Fließen des Werkstückmaterials, wenn der ausgeübte Druck oberhalb der Fließgrenze des Werkstückmaterials liegt. Sowohl die Verfestigungsvorgänge als auch die Fließvorgänge führen für sich oder in Kombination zu der angestrebten Volumenverkleinerung des Werkstückmaterials und der komplementären Volumenvergrößerung des Gewindeprofils.

Das Eindrückvolumen wird dabei vorzugsweise durch die Anpassung eines Gewindeformprofils oder eines Wirkprofils des Gewindeformwerkzeuges an das vorab erzeugte Vorgewindeprofil festgelegt und ergibt sich insbesondere als Differenzvolumen der jeweiligen Abmessungen von Vorgewindeprofil und Gewindeformprofil abzüglich eines eventuellen und in der Regel relativ kleinen Rückstellvolumens aufgrund elastischer Rückstellung des Werkstückmaterials.

Ein Gewindeprofil, sei es das Vorgewindeprofil, das Gewindeformprofil oder das Endgewindeprofil, ist dabei in der üblichen Weise als Kontur eines Querschnitts des Gewindeganges senkrecht zu dessen spiral- oder schraubenförmigen Verlauf oder Kontur eines Längsschnittes durch den Gewindegang in einer die Gewindemittelachse enthaltenden Schnittebene definiert.

Die Endgewindeflanken des Endgewindeprofils reichen somit wenigstens abschnittsweise weiter in das Werkstückmaterial als zuvor das Vorgewindeprofil oder das Endgewindeprofil ist zumindest in einem Teilbereich der Gewindeflanken um das beim Einformen verdrängte Volumen größer als das Vorgewindeprofil.

Das Vorgewindeprofil und/oder das Gewindeformprofil kann durch ein einziges Profil oder auch eine Überlagerung mehrerer einzelner Profile als resultierendes Wirkprofil erzeugt oder dargestellt werden.

Das Erzeugen des Vorgewindeprofils und das Weiterformen des Vorgewindeprofils in das Endgewindeprofil in den beiden Arbeitsschritten können mit unterschiedlichen Werkzeugen oder auch mit einem gemeinsamen Kombinationswerkzeug erfolgen.

Das oder die Werkzeuge oder der oder die Werkzeugbereich(e) zum Erzeugen des Vorgewindes in dem ersten Arbeitsschritt kann bzw. können insbesondere einen Gewindebohrer und/oder einen Gewindefräser und das oder die Werkzeuge oder der oder die Werkzeugbereich(e) zum Fertigformen des Endgewindes in dem zweiten Arbeitsschritt kann bzw. können einen Gewindefurcher und/oder einen Zirkulargewindeformer umfassen.

Bei einem Verfahren zur Erzeugung eines Gewindes in einem Werkstück mit Erzeugen eines Vorgewindes mit einem Vorgewindeprofil in dem Werkstück in wenigstens einem ersten Arbeitsschritt durch Abtragen von Material des Werkstücks und Erzeugen eines Endgewindes mit einem Endgewindeprofil in wenigstens einem zweiten Arbeitsschritt durch plastisches Nachformen des Materials des Werkstücks wenigstens in einem Teilbereich des Vorgewindeprofils mittels wenigstens eines Gewindeformbereichs mit einem Gewindeformprofil kann auch alternativ oder zusätzlich zu den bislang beschriebenen Lösungen die Prozesssicherheit erhöht werden, indem ein positionsgenaues Einführen des Gewindeanfangs des Gewindeformbereichs am Gewindeanfang des Vorgewindes gewährleistet wird. Dies kann durch eine oder mehrere der folgenden Maßnahmen geschehen:

Zum Einführen oder Einfädeln des nachfolgenden Gewindeformbereichs kann dieser einen Einführbereich oder ein Einführungsgewinde aufweisen mit einem dem Vorgewindeprofil angepassten Profil.

Es kann ein weicher Druckausgleich oder eine Minusprogrammierung bei Zugausgleich im Werkzeugspannmittel vorgesehen sein.

Es kann ein definierter Gewindeanfang des Vorgewindes im Werkstück und ein exaktes Einfädeln des nachfolgenden Gewindeformbereichs an diesem Gewindeanfang durch Positionsbestimmung (axial und rotatorisch) des oder der Werkzeuge(s) erzeugt werden.

Durch diese Kombination spanabhebender und umformender Fertigungsschritte können insbesondere
- Gewinde auch in schlecht fließenden oder umformbaren Werkstoffen, wie z.B. Grauguss, (teilweise oder in der Endbearbeitung) formend erzeugt werden,
- die Prozesskräfte reduziert werden,
- auch Gewinde mit großen Gewindesteigungen, insbesondere bis 6 mm, und/oder großen Bearbeitungsquerschnitten (in der Endbearbeitung) umformend erzeugt werden,
- eine sogenannte Krallenbildung trotz der umformenden Endbearbeitung vermieden oder reduziert werden und damit der Mutterkern oder Kerndurchmesser in engen Toleranzen gehalten werden,
- eine Verfestigung und Erhöhung der Dauerfestigkeit und dynamischen Festigkeit der Gewinde, zumindest von deren endgeformten Gewindebereichen erreicht werden,
- eine Glättung von Gewindeoberflächen, zumindest an den umgeformten Bereichen, erzielt werden.

Mit dem Verfahren und dem oder den Werkzeug(en) gemäß der Erfindung können zwei- oder mehrstufig alle gängigen Gewindetypen, einschließlich metrische Gewinde (z.B. nach DIN oder ISO), Rohrgewinde, US Unified Gewinde MJ-Gewinde, US UNJ-Gewinde, kegelige Gewinde, zylindrische Gewinde, Trapezgewinde, Rundgewinde, Sägengewinde, Whitworth-Gewinde und auch Sondergewinde wie Kugelumlaufgewinde oder Self-Lock-Gewinde hergestellt und/oder gelehrt werden.

Die Erfindung wird nachfolgend anhand von Ausführungsbeispielen und unter Bezugnahme auf die Zeichnungen weiter erläutert. Es zeigen jeweils in einem Längsschnitt:
- FIG 1: ein geschnittenes Vorgewindeprofil,
- FIG 2: die Außenprüfung des Vorgewindeprofils am Gewindegrund gemäß FIG 1 mittels einer Vorgewindegrund-Gutlehre,
- FIG 3: die Außenprüfung des Vorgewindeprofils am Gewindegrund gemäß FIG 1 mittels einer Vorgewindegrund-Ausschusslehre,
- FIG 4: die Flankenprüfung des Vorgewindeprofils gemäß FIG 1 mittels einer Vorgewindeflanken-Gutlehre,
- FIG 5: die Flankenprüfung des Vorgewindeprofils gemäß FIG 1 mittels einer Vorgewindeflanken-Ausschusslehre,
- FIG 6: eines Gewindeformprofils zum spanlosen Nachformen des geschnittenen Vorgewindeprofils gemäß FIG 1,
- FIG 7: das aus der Überlagerung der beiden Profile gemäß FIG 1 und 6 resultierende Endgewindeprofil,
- FIG 8: die Außenprüfung des Endgewindeprofils gemäß FIG 7 am Gewindegrund mittels einer Endgewindegrund-Gutlehre.

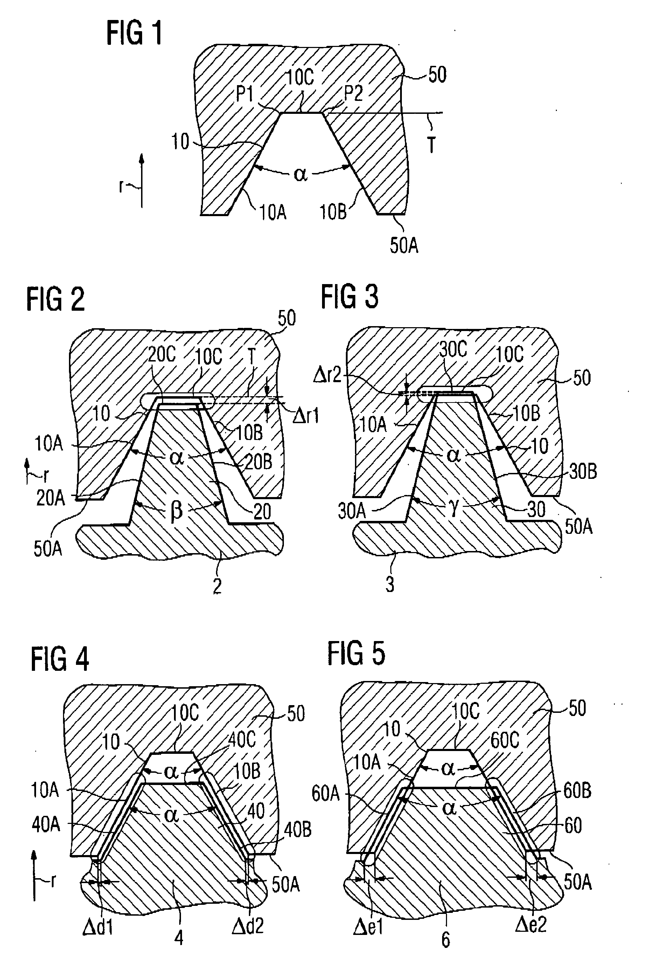

Einander entsprechende Teile und Größen sind in den FIG 1 bis 8 mit denselben Bezugszeichen versehen.

Das Vorgewindeprofil 10 gemäß FIG 1 bis 5 ist bei einem ersten Arbeitsschritt spanabhebend erzeugt oder geschnitten und ein Innengewinde an einer Oberfläche 50A des Werkstücks 50, die die Innenfläche einer Bohrung ist. Der Radius von einer nicht dargestellten Mittelachse der Bohrung und des Gewindes ist mit r bezeichnet. In der dargestellten Ausführungsform ist das Vorgewindeprofil 10 trapezförmig ausgebildet mit zwei geradlinigen Vorgewindeflanken 11A und 11B, die einen Winkel α zueinander einschlie-ßen, und einem flachen Gewindegrund 11C, der auf Höhe einer Trennlinie T verläuft, die Übergangspunkte P1 und P2 zwischen den Vorgewindeflanken 11A und 11 B und Gewindegrund 11C definiert.
Gemäß FIG 2 wird nun das erzeugte Vorgewindeprofil 10 mit einer Vorgewindegrund-Gutlehre 2 hinsichtlich eines Minimalwertes oder unteren Toleranzwertes seines in Richtung des Radius r gemessenen Außendurchmessers geprüft oder gelehrt. Dazu wird die Vorgewindegrund-Gutlehre 2 mit einem Lehrengewindeprofil 20 in das Vorgewinde mit dem Vorgewindeprofil 10 eingeschraubt. Das Lehrengewindeprofil 20 der Vorgewindegrund-Gutlehre 2 weist einen Lehrengewindegrundbereich 20C auf, der ebenfalls horizontal und gerade verläuft wie der Vorgewindegrund 10C, jedoch radial in Richtung r um eine vorgegebene Differenz Δr1 weniger weit nach außen ragt als der gewünschte Sollradius oder Außenradius (oder: Außendurchmesser) des Vorgewindegrunds 10C- Die Lehrengewindeflanken 20A und 20B des Lehrengewindeprofils 20 sind unter einem Winkel β < α zueinander gerichtet und sind somit ausreichend weit von den zugehörigen Vorgewindeflanken 10A und 10B entfernt. Die Vorgewindegrund-Gutlehre 2 mit einem Lehrgewindeprofil 20 muss nun vollständig in das Vorgewinde mit dem Vorgewindeprofil 10 über dessen gesamte Gewindelänge eingeschraubt werden können, d.h. der Lehrengewindegrundbereich 20C darf beim Einschrauben der Vorgewindegrund-Gutlehre 2 nicht an den Vorgewindegrund 10C anschlagen. Andernfalls ist der Gewindegrund 10C des Vorgewindeprofils 10 zumindest teilweise radial nicht genügend weit außen und das erzeugte Vorgewinde muss noch einmal nachbearbeitet oder tiefer geschnitten werden oder wird als Ausschuss aus dem Fertigungsprozess genommen.

Nun wird gemäß FIG 3 das erzeugte Vorgewindeprofil 10 mit einer Vorgewindegrund-Ausschusslehre 3 hinsichtlich eines Maximalwertes oder oberen Toleranzwertes seines in Richtung des Radius r gemessenen Außendurchmessers geprüft oder gelehrt. Das Lehrengewindeprofil 30 der Vorgewindegrund-Ausschusslehre 2 weist einen Lehrengewindegrundbereich 30C auf, der ebenfalls horizontal und gerade verläuft wie der Vorgewindegrund 10C, jedoch radial in Richtung r um eine vorgegebene Differenz Δr2 weiter nach außen ragt als der gewünschte Sollradius oder Außenradius (oder: Außendurchmesser) des Gewindegrunds 10C des Vorgewindeprofils 10. Die Lehrengewindeflanken 30A und 30B des Lehrengewindeprofils 30 sind unter einem Winkel γ < α zueinander gerichtet und sind somit ausreichend weit von den zugehörigen Vorgewindeflanken 10A und 10B entfernt. Die Vorgewindegrund-Ausschusslehre 3 mit dem Lehrengewindeprofil 30 darf nun gar nicht oder nur maximal um einen bestimmten Umdrehungswinkel von maximale zwei Umdrehungen in das Vorgewinde mit dem Vorgewindeprofil 10 eingeschraubt werden können. Andernfalls ist der Gewindegrund 10C des Vorgewindeprofils 10 radial zu weit außen und das erzeugte Vorgewinde ist zu tief geschnitten und wird deshalb als Ausschuss aus dem Fertigungsprozess genommen.

Somit wird mit der Vorgewindegrund-Gutlehre 2 sowie der Vorgewinde-Ausschusslehre 3 nur der (in FIG 2 oder 3 umkringelte oder eingekreiste) Bereich des Vorgewindegrundes 10C auf seine richtigen radialen Abmessungen und eventuelle Abweichungen aufgrund Fertigungsfehlern geprüft.

Gemäß FIG 4 wird das erzeugte Vorgewindeprofil 10 mit einer Vorgewindeflanken-Gutlehre 4 hinsichtlich seines minimal zulässigen Flankenabstands (oder: Flankendurchmessers) geprüft oder gelehrt. Das Lehrengewindeprofil 40 der Vorgewindeflanken-Gutlehre 4 weist einen Lehrengewindegrund 40C auf, der ebenfalls horizontal und gerade verläuft wie der Vorgewindegrund 10C, jedoch radial in Richtung r deutlich weniger weit nach außen ragt als der gewünschte Sollradius oder Außenradius (oder: Außendurchmesser) des Vorgewindegrunds 10C und somit ausreichend weit von dem Vorgewindegrund 10C entfernt ist. Die Lehrengewindeflanken 40A und 40B des Lehrengewindeprofils 40 der Vorgewindeflanken-Gutlehre 4 sind nun unter dem gleichen Winkel α zueinander gerichtet wie die Vorgewindeflanken 10A und 10B und verlaufen parallel zu diesen jeweils nach innen versetzt unter einem axialen, d.h. in Richtung der Gewindeachse gemessenen Abstand von Δd1 bzw. Δd2, wenn der Flankenabstand der Vorgewindeflanken 10A und 10B seinen Sollwert aufweist. Die Vorgewindeflanken-Gutlehre 4 mit ihrem Lehrgewindeprofil 40 muss also vollständig in das Vorgewinde mit dem Vorgewindeprofil 10 über dessen gesamte Gewindelänge eingeschraubt werden können, d.h. Lehrengewindeflanken 40A und 40B dürfen beim Einschrauben der Vorgewindeflanken-Gutlehre 2 nicht an den zugehörigen Vorgewindeflanken 10A und 10B anschlagen. Andernfalls sind die Vorgewindeflanken 10A und 10B zumindest teilweise axial nicht genügend weit voneinander beabstandet und das erzeugte Vorgewinde muss noch einmal nachbearbeitet oder breiter geschnitten werden oder wird als Ausschuss aus dem Fertigungsprozess genommen.

Nun wird gemäß FIG 5 das erzeugte Vorgewindeprofil 10 auch mit einer Vorgewindeflanken-Ausschusslehre 6 hinsichtlich seines maximal zulässigen en Flankenabstands (oder: Flankendurchmessers) geprüft oder gelehrt. Das Lehrengewindeprofil 60 der Vorgewindeflanken-Ausschusslehre 6 weist einen Lehrengewindegrund 60C auf, der ebenfalls horizontal und gerade verläuft wie der Vorgewindegrund 10C, jedoch radial in Richtung r deutlich weniger weit nach außen ragt als der Vorgewindegrund 10C und somit ausreichend weit von dem Vorgewindegrund 10C entfernt ist. Die Lehrengewindeflanken 60A und 60B des Lehrengewindeprofils 60 der Vorgewindeflanken-Ausschusslehre 6 sind nun unter dem gleichen Winkel α zueinander gerichtet wie die Vorgewindeflanken 10A und 10B und verlaufen parallel zu diesen seitlich oder axial jeweils weiter außen unter einem axialen, d.h. in Richtung der Gewindeachse gemessenen, Abstand von Δe1 bzw. Δe2, wenn der Flankenabstand der Vorgewindeflanken 10A und 10B seinen Sollwert aufweist. Die Vorgewindeflanken-Ausschusslehre 6 mit dem Lehrengewindeprofil 60 darf nun gar nicht oder nur maximal um einen bestimmten Umdrehungswinkel von maximal zwei Umdrehungen in das Vorgewinde mit dem Vorgewindeprofil 10 eingeschraubt werden können. Andernfalls ist der Flankenabstand der Vorgewindeflanken 10A und 10B des Vorgewindeprofils 10 zu groß und das erzeugte Vorgewinde ist zu breit geschnitten und wird deshalb als Ausschuss aus dem Fertigungsprozess genommen.

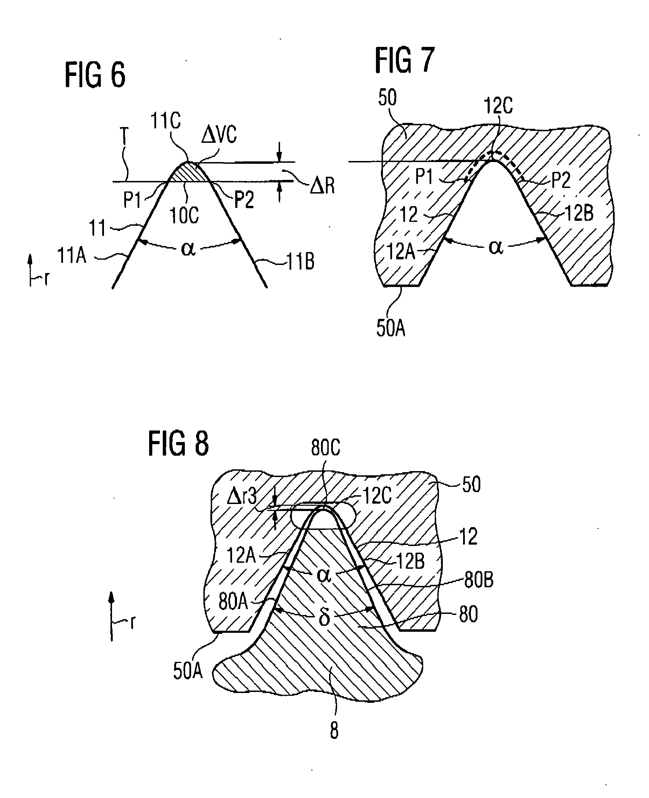

In FIG 6 ist nun ein Gewindeformprofil 11 zum formenden Nachbearbeiten des Vorgewindeprofils 10 gemäß FIG 1 in einem zweiten Arbeitsschritt dargestellt in Überlagerung zum Vorgewindeprofil 10. Bei dem Gewindeformprofil 11 schneiden sich dessen linearen Flanken 11A und 11B mit der am gleichen Radius r wie in FIG 1 angeordneten Trennlinie T in Übergangspunkten P1 und P2, die innerhalb der Flanken 11A und 11B liegen. Die Flanken 11A und 11B des Gewindeformprofils 11 sind unter demselben Winkel α zueinander gerichtet wie die Vorgewindeflanken 10A und 10B. Der Gewindegrundbereich 11C des Gewindeformprofils 11 ist abgerundet und ist radial, d.h. in Richtung des Radius r, um eine radiale Differenz oder einen radialen Abstand ΔR weiter außen angeordnet oder weist eine entsprechende größere radiale Zustellung in das Werkstück 50 auf als das Vorgewindeprofil 10 bzw. dessen Vorgewindegrund 10C. Der Gewindegrundbereich 11C kann aber auch ebenfalls horizontal und/oder linear verlaufen.

Die Überlagerung der beiden Profile 10 und 11 gemäß FIG 6 in den aufeinanderfolgenden Verfahrens- oder Arbeitsschritten, also zunächst spanendes Erzeugen des Vorgewindeprofils 10 und danach formendes Nachbearbeiten des Vorgewindeprofils 10 durch das Gewindeformprofil 11 ergibt das Endgewindeprofil 12, das in FIG 7 dargestellt ist.

Durch Kaltverformung und Fließen des Materials des Werkstücks 50 sowie Verfestigung wird mit dem Gewindeformprofil 11 aufgrund des radialen Abstands ΔR von Vorgewindegrund 10C und Gewindegrundbereich 11C am Gewindegrund 21C des Vorgewindes 21 das Material des Werkstücks 50 um ein Eindrückvolumen ΔVC eingedrückt. An den Vorgewindeflanken 10A und 10B wird dagegen das Material des Werkstücks 50 nicht umgeformt oder weiterverformt.

Der Endgewindegrund 12C des Endgewindeprofils 12 ist somit formend erzeugt und entspricht in der Form dem Gewindegrundbereich 11C des Gewindeformprofils 11, während die Endgewindeflanken 12A und 12B ausschließlich spanend erzeugt sind und in der Form den Vorgewindeflanken 10A und 10B entsprechen.

Nun wird in einem weiteren Prüfungs- oder Lehrschritt das fertigbearbeitete Endgewindeprofil 12 hinsichtlich des minimal zulässigen Außenradius seines nachgeformten Endgewindegrundes 12C geprüft oder gelehrt. Dazu wird nun eine Endgewindegrund-Gutlehre 8 verwendet mit einem Lehrengewindeprofil 80, dessen Lehrengewindegrundbereich 80C gerundet ist und parallel verläuft wie bzw. zum Endgewindegrund 12C, aber radial in Richtung r um eine vorgegebene Differenz Δr3 weniger weit nach außen ragt als der gewünschte Sollradius oder Außenradius (oder: Außendurchmesser) des Endgewindegrunds 10C. Die Lehrengewindeflanken 80A und 80B des Lehrengewindeprofils 20 sind unter einem Winkel δ < α zueinander gerichtet und sind somit austeichend weit von den zugehörigen Endgewindeflanken 12A und 12B entfernt. Die Endgewindegrund-Gutlehre 8 mit dem Lehrengewindeprofil 80 muss nun vollständig in das Endgewinde mit dem Endgewindeprofil 12 über dessen gesamte Gewindelänge eingeschraubt werden können, d.h. der Lehrengewindegrundbereich 80C darf beim Einschrauben der Endgewindegrund-Gutlehre 8 nicht an den Endgewindegrund 12C anschlagen. Andernfalls ist der Endgewindegrund 12C des Endgewindeprofils 12 zumindest teilweise radial nicht genügend weit außen und das erzeugte Endgewinde muss noch einmal nachbearbeitet oder tiefer geformt werden oder wird als Ausschuss aus dem Fertigungsprozess genommen.

Es kann nun auch das Endgewinde und dessen Endgewindeprofil 12 noch auf einen maximal zulässigen Außenradius der radialen Abstand des Endgewindegrunds 12C mittels einer Endgewinde-Ausschusslehre analog wie das Vorgewinde gemäß FIG 3 und/oder auch der Flankenabstand der Endgewindeflanken 12A und 12B mit einer Endgewindeflanken-Gutlehre analog wie das Vorgewinde in FIG 4 und/oder einer Endgcwindeflanken-Ausschusslehre analog wie das Vorgewinde in FIG 5 gelehrt werden. Eine Lehrung des Flankenabstands wird in der Regel dann vorgenommen, wenn beim Nachformen des Vorgewindes mit dem Gewindeformprofil zusätzlich auch die Vorgewindeflanken weiter eingedrückt werden, die Endgewindeflanken also weiter beabstandet sind als die Vorgewindeflanken.

Das Vorgewindeprofil wird vorzugsweise mit einem Gewindebohrer oder einem Gewindefräser oder auch einem Zirkularbohrgeraindefräser erzeugt. Im Anschluss an die spanabhebende Erzeugung des Vorgewindes wird in einem zweiten Arbeitschritt das Vorgewinde zum Erzeugen des Endgewindes weiter ausgeformt mit einem mit dem Gewindeformprofil als Wirkprofil versehenen Gewindeformwerkzeug, beispielsweise einem Gewindefurcher oder einem Zirkulargewindeformer. Alternativ können auch beide Arbeitsschritte mit einem Kombinationswerkzeug durchgeführt werden, das axial zur Werkzeugachse versetzt zueinander einen Gewindebohrbereich und/oder einen Gewindefräsbereich als schneidenden Bereich und einen Gewindefurchbereich und/oder einen Zirkulargewindeformbereich als formenden Bereich aufweist, die zeitlich nacheinander in das Werkstück eingreifen.

Die gekrümmten Gewindegrundbereiche sind vorzugsweise in allen Ausführungsformen bezogen auf den Innenraum oder den Gewindegang konvex und insbesondere kreisförmig oder elliptisch oder parabelförmig, gekrümmt.

Das Gewindeformprofil ergibt sich in allen Ausführungsformen als Wirkprofil oder überlagertes oder effektives Profil eines Gewindeformprozesses oder eines oder mehrerer Grewindeformwerkzeuge(s) und entspricht bei einem Gewindeformwerkzeug mit mehreren Drückstollen oder Formzähnen der Überlagerung aller einzelnen Profile der einzelnen Drückstollen oder Formzähne.

### Bezugszeichenliste

- 10: Vorgewindeprofil
- 10A, 10B: Vorgewindeflanke
- 10C: Vorgewindegrund
- 11: Gewindeformprofil
- 11A, 11B: Flanke
- 11C: Gewindegrundbereich
- 12: Endgewindeprofil
- 12A, 12B: Flanke
- 12C: Gewindegrund

- P1, P2: Übergangpunkte
- r: Radius
- T: Trennlinie
- α: Winkel
- ΔR: radialer Abstand
- ΔVC: Eindrückvolumen

## Patentansprüche

1. Verfahren zum Lehren eines in wenigsten zwei Arbeitschritten erzeugten Gewindes in einem Werkstück mit den folgenden Verfahrensschritten:
a) Lehren wenigstens eines in wenigstens einem ersten Arbeitsschritt (oder: Prozessschritt) durch Abtragen von Material des Werkstücks (oder: spanabhebend, spanend) erzeugten Vorgewindes mit einem Vorgewindeprofil mittels wenigstens einer an das Vorgewindeprofil angepassten Vorgewindelehre, insbesondere einer Vorgewinde-Gutlehre und/oder einer Vorgewinde-Ausschusslehre,
b) Lehren eines in wenigstens einem zweiten Arbeitschritt durch plastisches Eindrücken (oder: spanloses Formen oder Umformen) des Materials des Werkstücks wenigstens in einem Teilbereich des Vorgewindeprofils mittels wenigstens eines Gewindeformprofils nachgeformten Endgewindes mit einem Endgewindeprofil mittels wenigstens einer an das Endgewindeprofil angepassten Endgewindelehre, insbesondere einer Endgewinde-Gutlehre und/oder einer Endgewinde-Ausschusslehre.

2. Verfahren nach Anspruch 1, bei dem das Endgewinde nur in einem in dem wenigstens einen zweiten Arbeitsschritt nachgeformten Teilbereich des Endgewindeprofils mittels der wenigstens einen Endgewindelehre auf wenigstens eine zulässige Abmessung in diesem Teilbereich gelehrt wird und in einem in dem wenigstens einen zweiten Arbeitsschritt nicht nachgeformten Teilbereich des Endgewindeprofils nicht gelehrt wird.

3. Verfahren nach Anspruch 1 oder Anspruch 2, bei dem das Vorgewinde mit wenigstens einer Vorgewindelehre im Bereich eines Vorgewindegrundes des Vorgewindeprofils gelehrt wird
und/oder
bei dem das Vorgewinde mit wenigstens einer Vorgewindelehre, vorzugsweise einer Votgewiadegrund-Gutlehre, auf eine minimal zulässige radiale Abmessung des Vorgewindegrunds des Vorgewindeprofils gelehrt wird
und/oder
bei dem das Vorgewinde mit wenigstens einer Vorgewindelehre, vorzugsweise einer Vorgewindegrund-Ausschusslehre, auf eine maximal zulässige radiale Abmessung des Vorgewindegrunds des Vorgewindeprofils gelehrt wird.

4. Verfahren nach einem der vorhergehenden Ansprüche,
bei dem das Vorgewinde mit wenigstens einer Vorgewindelehre im Bereich von Vorgewindeflanken des Vorgewindeprofils gelehrt wird
und/oder
bei dem das Vorgewinde mit wenigstens einer Vorgewindelehre, vorzugsweise einer Vorgewindeflanken-Gutlehre, auf einen minimal zulässigen Abstand der Vorgewindeflanken des Vorgewindeprofils gelehrt wird
und/oder
bei dem das Vorgewinde mit wenigstens einer Vorgewindelehre, vorzugsweise einer Vorgewindeflanken-Ausschusslehre, auf einen maximal zulässigen Abstand der Vorgewindeflanken des Vorgewindeprofils gelehrt wird.

5. Verfahren nach einem der vorhergehenden Ansprüche, bei dem das Endgewinde mit wenigstens einer Endgewindelehre im Bereich des Endgewindegrundes des Endgewindeprofils gelehrt wird
und/oder
bei dem das Endgewinde mit wenigstens einer Endgewindelehre, vorzugsweise einer Endgewindegrund-Gutlehre, auf eine minimal zulässige radiale Abmessung des Endgewindegrunds des Endgewindeprofils gelehrt wird
und/oder
bei dem das Endgewinde mit wenigstens einer Endgewindelehre, vorzugsweise einer Endgewindegrund-Ausschusslehre, auf eine maximal zulässige radiale Abmessung des Endgewindegrunds des Endgewindeprofils gelehrt wird.

6. Verfahren nach einem der vorhergehenden Ansprüche, bei dem das Endgewinde mit wenigstens einer Endgewindelehre im Bereich von Endgewindeflanken des Endgewindeprofils gelehrt wird
und/oder
bei dem das Endgewinde mit wenigstens einer Endgewindelehre, vorzugsweise einer Endgewindeflanken-Gutlehre, auf einen minimal zulässigen Abstand der Endgewindeflanken des Endgewindeprofils gelehrt wird
und/oder
bei dem das Endgewinde mit wenigstens einer Endgewindelehre, vorzugsweise einer Endgewindeflanken-Ausschusslehre, auf einen maximal zulässigen Abstand der Endgewindeflanken des Endgewindeprofils gelehrt wird.

7. Anordnung zum Lehren eines in wenigsten zwei Arbeitschritten erzeugten Gewindes in einem Werkstück umfassend
a) wenigstens eine Vorgewindelehre zum Lehren eines in wenigstens einem ersten Arbeitsschritt durch Abtragen von Material des Werkstücks (oder: spanabhebend, spanend) erzeugten Vorgewindes mit einem Vorgewindeprofil mit einem an das Vorgewindeprofil angepassten Lehrengewindeprofil,
b) wenigstens eine Endgewindelehre zum Lehren eines in wenigstes einem zweiten Arbeitschritt durch plastisches Eindrücken (oder: spanloses Formen oder Umformen) des Materials des Werkstücks wenigstens in einem Teilbereich des Vorgewindeprofils mittels wenigstens eines Gewindeformprofils erzeugten Endgewindes mit einem Endgewindeprofil mit einem an das Endgewindeprofil angepassten Lehrengewindeprofil.

8. Anordnung nach Anspruch 7 mit wenigstens einer Endgewinde-Lehre, vorzugsweise einer Endgewinde-Gutlehre und/oder einer Endgewinde-Ausschusslehre, zum Lehren des Endgewinde nur in einem in dem wenigstens einen zweiten Arbeitsschritt nachgeformten Teilbereich des Endgewindeprofils auf wenigstens eine zulässige Abmessung in diesem Teilbereich.

9. Anordnung nach Anspruch 7 oder Anspruch 8 mit wenigstens einer Vorgewindelchte zum Lehren des Vorgewindes im Bereich eines Vorgewindegrundes des Vorgewindeprofils
und/oder
mit wenigstens einer Vorgewindelehte zum Lehren des Vorgewindes auf eine minimal zulässige radiale Abmessung des Vorgewindegrunds des Vorgewindeprofils, vorzugsweise einer Vorgewindegrund-Gutlehre,
und/odet
mit wenigstens einer Vorgewindelehre zum Lehren des Vorgewindes auf eine maximal zulässige radiale Abmessung des Vorgewindegrunds des Vorgewindeprofils, vorzugsweise einer Vorgewindegrund-Ausschusslehre.

10. Anordnung nach einem der Ansprüche 7 bis 9 mit wenigstens einer Vorgewindelehre zum Lehren des Vorgewindes im Bereich von Vorgewindeflanken des Vorgewindeprofils
und/oder
mit wenigstens einer Vorgewindelehre zum Lehren des Vorgewindes auf einen minimal zulässigen Abstand der Vorgewindeflanken des Vorgewindeprofils, vorzugsweise einer Vorgewindeflanken-Gutlehre,
und/oder
mit wenigstens einer Vorgewindelehre zum Lehren des Vorgewindes auf einen maximal zulässigen Abstand der Vorgewindeflanken des Vorgewindeprofils, vorzugsweise einer Vorgewindeflanken-Ausschusslehre.

11. Anordnung nach einem der Ansprüche 7 bis 10 mit wenigstens einer Endgewindelehre zum Lehren des Endgewindes im Bereich eines Endgewindegrundes des Endgewindeprofils
und/oder
mit wenigstens einer Endgewindelehre zum Lehren des Endgewindes auf eine minimal zulässige radiale Abmessung des Endgewindegrunds des Endgewindeprofils, vorzugsweise einer Endgewindegrund-Gutlehre,
und/oder
mit wenigstens einer Endgewindelehre zum Lehren des Endgewindes auf eine maximal zulässige radiale Abmessung des Endgewindegrunds des Endgewindeprofils, vorzugsweise einer Endgewindegrund-Ausschusslehre.

12. Anordnung nach einem der Ansprüche 7 bis 11 mit wenigstens einer Endgewindelehre zum Lehren des Endgewindes im Bereich von Endgewindeflanken des Endgewindeprofils
und/oder
mit wenigstens einer Endgewindelehre zum Lehren des Endgewindes auf einen minimal zulässigen Abstand der Endgewindeflanken des Endgewindeprofils, vorzugsweise einer Endgewindeflanken-Gutlehre,
und/oder
mit wenigstens einer Endgewindelehre zum Lehren des Endgewindes auf einen maximal zulässigen Abstand der Endgewindeflanken des Endgewindeprofils, vorzugsweise einer Endgewindeflanken-Ausschusslehre.

13. Verfahren zur Erzeugung eines Gewindes in einem Werkstück mit den folgenden Verfahrensschritten:
a) Erzeugen eines Vorgewindes mit einem Vorgewindeprofil in dem Werkstück in wenigstens einem ersten Arbeitsschritt durch Abtragen von Material des Werkstücks,
b) Lehren des Vorgewindes mittels wenigstens einer an das Vorgewindeprofil angepassten Vorgewindelehre,
c) Erzeugen eines Endgewindes mit einem Endgewindeprofil in wenigstens einem zweiten Arbeitsschritt durch plastisches Nachformen des Materials des Werkstücks wenigstens in einem Teilbereich des Vorgewindeprofils mittels wenigstens eines Gewindeformprofils,
d) Lehren des nachgeformten Endgewindes mit einem Endgewindeprofil mittels wenigstens einer an das Endgewindeprofil angepassten Endgewindelehre.

14. Verfahren nach Anspruch 13, bei dem das Endgewinde nur in einem in dem wenigstens einen zweiten Arbeitsschritt nachgeformten Teilbereich des Endgewindeprofils mittels der wenigstens einen Endgewindelehre auf wenigstens eine zulässige Abmessung in diesem Teilbereich gelehrt wird und in einem in dem wenigstens einen zweiten Arbeitsschritt nicht nachgeformten Teilbereich des Endgewindeprofils nicht gelehrt wird.

15. Verfahren zur Erzeugung eines Gewindes in einem Werkstück, insbesondere Verfahren nach Anspruch 13 oder Anspruch 14, mit den folgenden Verfahtensschritten:
a) Erzeugen eines Vorgewindes mit einem Vorgewindeprofil in dem Werkstück in wenigstens einem ersten Arbeitsschritt durch Abtragen von Material des Werkstücks,
b) Erzeugen eines Endgewindes mit einem Endgewindeprofil in wenigstens einem zweiten Arbeitsschritt durch plastisches Nachformen des Materials des Werkstücks wenigstens in einem Teilbereich des Vorgewindeprofils mittels wenigstens eines Gewindeformbereichs mit einem Gewindeformprofil,
c) wobei der Gewindeformbereich ein Einführungsgewinde aufweist mit einem dem Vorgewindeprofil angepassten Profil mit wenigstens teilweise aneinander anliegenden Gewindeflanken zum positionsgenauen Einführen des Gewindeformbereichs in das Vorgewinde
und/oder
d) wobei ein weicher Druckausgleich oder eine Minusprogrammierung bei Zugausgleich im Werkzeugspannmittel vorgesehen ist zur Unterstützung eines positionsgenauen Einführens des Gewindeformbereichs in das Vorgewinde
und/oder
e) wobei die axiale Position und Drehposition wenigstens eines zum Erzeugen des Vorgewindes vorgesehenen Vorgewindewerkzeugs oder - werkzeugbereichs und wenigstens eines zum Erzeugen des Endgewindes vorgesehenen Endgewindewerkzeugs oder -werkzeugbereichs bestimmt werden und **dadurch** das Endgewindewerkzeug oder der Endgewindewerkzeugbereich definiert am Gewindeanfang des Vorgewindes im Werkstück in das Vorgewinde eingeführt wird, insbesondere indem jeweils die axialen Positionen des jeweiligen Werkzeugs und zugehöriger Werkzeugspannmittels und die Relativdrehpositionen von Werkzeug zu Werkzeugspannmitteln zueinander bestimmt oder berücksichtigt werden.
